# EUROPEAN PATENT APPLICATION

(11) **EP 2 842 422 A1**
(43) Date of publication of application: **04.03.2015**
(21) Application number: 12858690.6
(22) Date of filing: 08.05.2012
(51) Int. Cl.: A01K 97/10, F16M 13/00

(54) **SHELF ROD FORK AND SHELF ROD PRONG BASE**

(30) Priority: 28.04.2012 CN 201210134092; 28.04.2012 CN 201220193197 U
(71) Applicant: Zhejiang Hengfeng Top Leisure Co., Ltd., Zhejiang 313200 (CN)
(72) Inventor: YANG, Baoqing, Hangzhou Zhejiang 313200 (CN)
(74) Representative: Cabinet Laurent & Charras
(86) International application number: PCT/CN2012/075179
(87) International publication number: WO 2013/159390

(57) **Abstract**

A pole holding fork includes a pole holding fork head (1) and a base (2) for the pole holding fork head. The pole holding fork head is provided with a connecting post (11) configured to connect with the base for the pole holding fork head, and the connecting post has an axial symmetric polygonal cross section and is provided with a locating groove (12). The base for the pole holding fork head includes a base body (21), a locating plate (22) and an elastic returning member (23); the base body is provided with a connecting hole (211) cooperating with the connecting post and a locating plate mounting groove (212) being communicated with the connecting hole (211); the locating plate arranged in the locating plate mounting groove is provided with a locating hole (221) cooperating with the connecting post; and the elastic returning member is arranged between the base body and the locating plate. During using, it only needs to press the locating plate inwardly, and adjust the pole holding fork head, and then release the locating plate, thereby realizing the orientation of the pole holding fork head. Thus the operation is simple and the orientation process is rapid.

## Description

The present application claims the benefit of Chinese Patent Application No. 201210134092.3 titled "POLE HOLDING FORK AND BASE FOR POLE HOLDING FORK HEAD", filed with the Chinese State Intellectual Property Office on April 28, 2012, and Chinese Patent Application No. 201220193197.1 titled "POLE HOLDING FORK AND BASE FOR POLE HOLDING FORK HEAD", filed with the Chinese State Intellectual Property Office on April 28, 2012, the entire disclosures of which are incorporated herein by reference.

### FIELD OF THE INVENTION

The present application relates to the technical field of outdoor appliances, and particularly to a pole holding fork, and further to a base for a pole holding fork head.

### BACKGROUND OF THE INVENTION

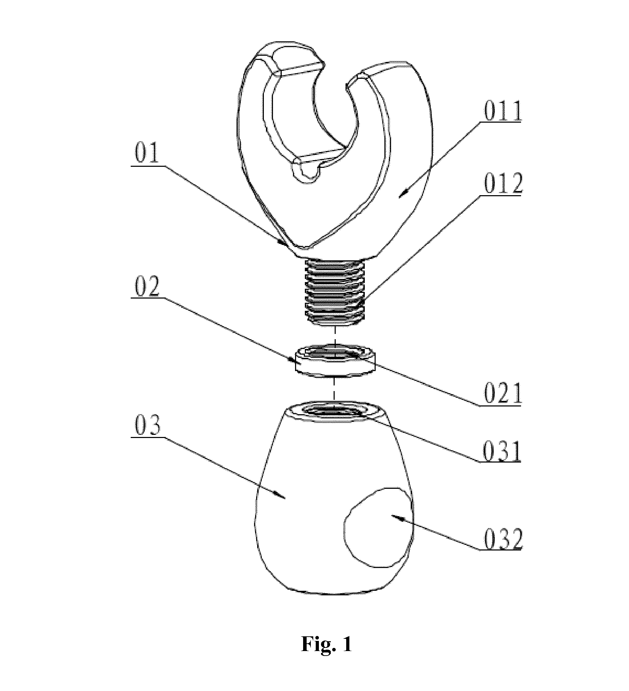

A pole holding fork is a fishing tackle, and is mainly used to fix a fishing pole. The pole holding fork is mounted with a matched pole holding fork head so as to prevent the fishing rod from sliding on the pole holding fork. As shown in Figure 1, the conventional pole holding fork includes a pole holding fork head 01, an orienting ring 02, a base 03 for the pole holding fork head and a bracket (not shown). Specifically, one end of the pole holding fork head 01 has a U-type fork head 011, and the other end thereof is provided with a threaded section 012. The orienting ring 02 is provided with an orienting threaded hole 021 cooperating with the threaded section 012. The base 03 for the pole holding fork head is provided with a mounting hole 032 cooperating with the bracket and an inner threaded hole 031 cooperating with the threaded section 012.

When using the pole holding fork, the base 03 for the pole holding fork head is mounted on the bracket via the mounting hole 032, and after sleeving the orienting ring 02 on the threaded section 012, the pole holding fork head 01 is screwed into the base 03 for the pole holding fork head. Then the bracket is fixed onto the ground, the direction of the pole holding fork head 01 may be adjusted by rotating the pole holding fork head 01 and the orienting ring 02, specifically, the orienting ring 02 is rotated to be disengaged from the base 03 for the pole holding fork head, and then the pole holding fork head 01 is rotated to be in a desired direction, and then the orienting ring 02 is rotated to be abutted against the base 03 for the pole holding fork head, such that due to a pre-tightening force between the orienting ring 02 and the base 03 for the pole holding fork head, the pole holding fork head 01 can not rotate.

As can be seen from the above description, in the conventional pole holding fork, the direction is adjusted via a threaded fit between the pole holding fork head 01, the orienting ring 02 and the base 03 for the pole holding fork head, and in the above using process, it requires to unscrew and screw the screw threads repeatedly, thus the operation is complicated, and the orientation can not be performed rapidly. Furthermore, the above orientation manner using the pre-tightening force and the threaded fit has a poor stability, and when the pole holding fork head is rotated unexpectedly, the conventional orientation manner is apt to be failed.

Accordingly, it is an urgent technical problem to be addressed by the skilled in the art to provide a pole holding fork, which is easy to operate and can realize a rapid orientation of a pole holding fork head.

### SUMMARY OF THE INVENTION

In view of this, the present application provides a pole holding fork which is easy to operate and can realize a rapid orientation of a pole holding fork head.

For realizing the above objects, the present application provides the following technical solutions.

A pole holding fork includes a pole holding fork head and a base for the pole holding fork head, wherein a bottom end of the pole holding fork head is provided with a connecting post having an axial symmetric polygonal cross section, the connecting post is provided with a locating groove, and the pole holding fork head is connected to the base for the pole holding fork head via the connecting post, and
the base for the pole holding fork head includes:
a base body provided with a connecting hole cooperating with the connecting post and a locating plate mounting groove being communicated with the connecting hole;
a locating plate arranged in the locating plate mounting groove and provided with a locating hole cooperating with the connecting post; and
an elastic returning member arranged between the base body and the locating plate.

Preferably, in the above pole holding fork, the cross section of the connecting post is of a regular hexagonal shape.

Preferably, the above pole holding fork further includes a position limiting pin, and the base body is provided with a position limiting hole, the position limiting pin is arranged in the position limiting hole, and the locating plate is provided with a position limiting groove configured to be stuck to the position limiting pin under the action of the elastic returning member.

Preferably, the above pole holding fork further includes a pressing button, and the pressing button is provided with a connecting groove, the locating plate is detachably and fixedly connected to the pressing button via the connecting groove, and one end of the elastic returning member is connected to the locating plate via the pressing button.

Preferably, in the above pole holding fork, the pressing button and the locating plate are formed integrally.

Preferably, in the above pole holding fork, the elastic returning member is a compression spring.

The present application provides a pole holding fork including a pole holding fork head and a base for the pole holding fork head. Specifically, a bottom end of the pole holding fork head is provided with a connecting post having an axial symmetric polygonal cross section, the connecting post is provided with a locating groove, and the pole holding fork head is connected to the base for the pole holding fork head via the connecting post; and the base for the pole holding fork head includes a base body, a locating plate and an elastic returning member, the base body is provided with a connecting hole cooperating with the connecting post and a locating plate mounting groove being communicated with the connecting hole, the locating plate arranged in the locating plate mounting groove is provided with a locating hole cooperating with the connecting post, and the elastic returning member is arranged between the base body and the locating plate.

When using the pole holding fork according to the present application initially, it only needs to press the locating plate inwardly, and insert the pole holding fork head into the base for the pole holding fork head, and then release the locating plate, thereby realizing the orientation of the pole holding fork head. When it needs to adjust the direction of the pole holding fork head during using the pole holding fork according to the present application, it only requires to press the locating plate, pull the pole holding fork head out of the base for the pole holding fork head, and then insert the pole holding fork head into the base for the pole holding fork head in an appropriate angle, and then finally release the locating plate, thereby realizing adjusting the direction of the pole holding fork head.

As can be seen from the above description, compared with the conventional pole holding fork in which the pole holding fork head and the base for the pole holding fork head are threadedly connected, the pole holding fork according to the present application is easy to operate and can realize a rapid orientation of the pole holding fork head.

The present application further provides a base for a pole holding fork head, wherein the base for the pole holding fork head is the base for the pole holding fork head in the above pole holding fork.

Preferably, the above base for the pole holding fork head further includes a converting rod, and one end of the converting rod is a converting rod connecting post cooperating with the connecting hole, and the other end of the converting rod is an inner threaded hole cooperating with a threaded section of an conventional pole holding fork head.

### BRIEF DESCRIPTION OF THE DRAWINGS

The above and other objects, features and advantages of the present application will become clearer with reference to the accompanying drawings. Same reference numerals indicate same parts in the accompanying drawings. The accompanying drawings are not depicted in proportion to the actual size, and are focused on showing the major idea of the present application.
Figure 1 is a schematic view showing the structure of a conventional pole holding fork;

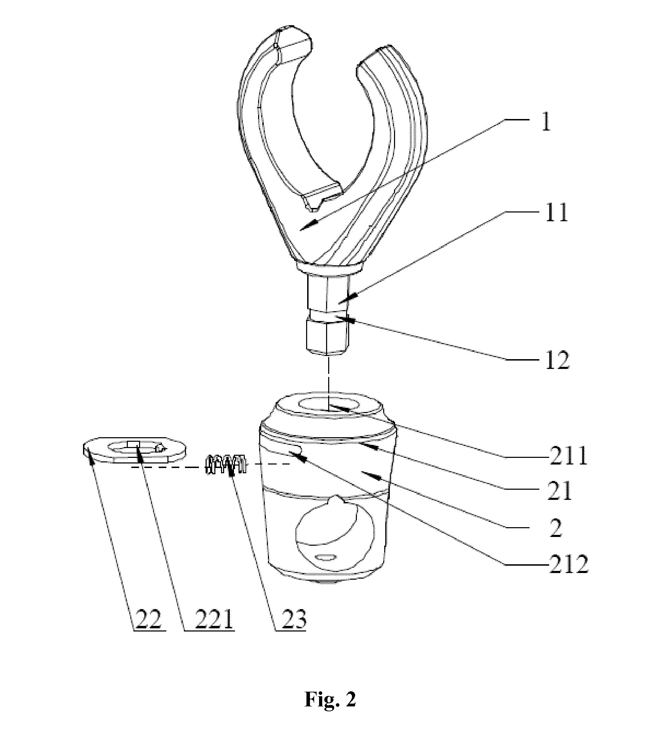

Figure 2 is a schematic view showing the structure of a pole holding fork according to an embodiment of the present application;
Figure 3 is a top view of a base for a pole holding fork head according to the embodiment of the present application;

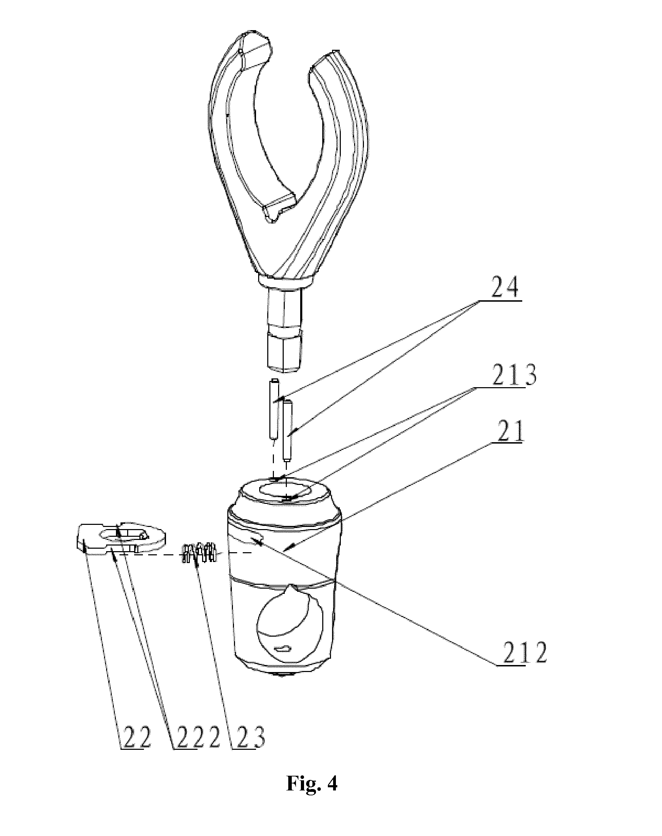

Figure 4 is a schematic view showing the structure of a pole holding fork provided with a position limiting pin according to an embodiment of the present application;
Figure 5 is a schematic view showing the structure of a pole holding fork provided with a pressing button according to an embodiment of the present application;
Figure 6 is a schematic view showing the structure of an integrated locating pressing button according to an embodiment of the present application;
Figure 7 is a schematic view showing the structure of a converting rod according to an embodiment of the present application;
Figure 8 is a schematic view showing the connection relationship of an conventional pole holding fork head, the converting rod and the base for the pole holding fork head; and
Figure 9 is a schematic view showing the structure of the conventional pole holding fork head, the converting rod and the base for the pole holding fork head which are assembled.

### DETAILED DESCRIPTION OF THE INVENTION

Embodiments of the present application are descried in detail hereinafter in conjunction with the accompanying drawings to make the above objects, features and advantages thereof more apparent and easy to understand.

Many specific details are illustrated in the following description to help fully understanding of the present application, however, the present application may also be implemented by other manners which are different from the embodiments described herein. Similar embodiments may be made by the person skilled in the art without departing from the meaning of the present application, therefore the present application is not limited to the following described embodiments.

Embodiments of the present application provide a pole holding fork, which is easy to operate and can realize a rapid orientation of a pole holding fork head.

As shown in Figure 1, the pole holding fork according to an embodiment of the present application includes a pole holding fork head 1 and a base 2 for the pole holding fork head.

One end of the pole holding fork head 1 has a U-type fork head similar to the conventional pole holding fork head, and the other end thereof is a connecting post 11 having an axial symmetric polygonal cross section. The connecting post 11 is provided with a locating groove 12. Preferably, the locating groove 12 is an annular locating groove arranged in a middle portion of the connecting post. The pole holding fork head 1 is connected to the base for the pole holding fork head via the connecting post 11.

The base 2 for the pole holding fork head further includes a base body 21, a locating plate 22 and an elastic returning member 23. Specifically, the base body 21 is provided with a connecting hole 211 and a locating plate mounting groove 212. A cross section of the connecting hole 211 is the same as that of the connecting post 11, such that the connecting post 11 can be inserted into the connecting hole 211. The locating plate mounting groove 212 is communicated with the connecting hole 211. Preferably, the locating plate mounting groove 212 is perpendicular to an axis of the connecting hole 211. The locating plate 22 is arranged in the locating plate mounting groove 212, and is provided with a locating hole 221 cooperating with the connecting post 11. It should be understood by the person skilled in the art that, after inserting the locating plate 22 into the locating plate mounting groove 212, the connecting post 11 is inserted into the connecting hole 211, in this way due to the blocking of the connecting post 11, the locating plate may not slide out. The elastic returning member 23 is arranged between the base body 21 and the locating plate 22. It should be understood by the person skilled in the art that, under the action of the elastic returning member 23, the locating plate 22 may be stuck into the locating groove 12, therefore the pole holding fork head 1 cannot be pulled out of the base 2 for the pole holding fork head.

It is well known that, the pole holding fork further includes other parts, such as a bracket, which are not so relevant to the core of the present application, thus will not be described herein.

When using the pole holding fork according to the present application, it only needs to press the locating plate 22 inwardly, and insert the pole holding fork head 1 into the base 2 for the pole holding fork head, and then release the locating plate 22, thereby realizing the orientation of the pole holding fork head 1. When it needs to adjust the direction of the pole holding fork head during using the pole holding fork according to the present application, it only requires to press the locating plate 22, pull the pole holding fork head 1 out of the base 2 for the pole holding fork head, and then insert the pole holding fork head 1 into the base 2 for the pole holding fork head in an appropriate angle, and then finally release the locating plate 22, thereby realizing adjusting the direction of the pole holding fork head 1.

As can be seen from the above description, compared with the conventional pole holding fork in which the pole holding fork head and the base for the pole holding fork head are threadedly connected, the pole holding fork according to the present application is easy to operate and can realize a rapid orientation of the pole holding fork head.

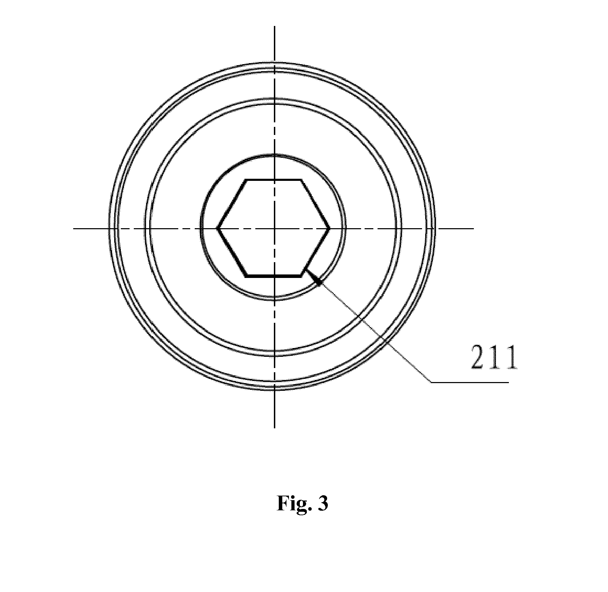

Specifically, in the pole holding fork according to the above embodiments, the cross section of the connecting post 11 is of a regular hexagonal shape, and the connecting hole 211 is of the same regular hexagonal shape, as shown in Figure 3.

Through experiments, it is found that when the connecting post has a cross section of a regular hexagonal shape, the pole holding fork may be located in three directions with an angle of 60 degree between every two of the three directions, which substantially meets the application requirement of the pole holding fork. And at the same time the connecting post 11 may have an excellent strength and toughness.

It is understandable for the person skilled in the art that, the cross section of the connecting post may further be of other axial symmetric shapes, such as a regular pentagonal shape, a regular heptagonal shape, a regular octagonal shape. The connecting post in the above embodiments is a regular polygonal prism having a constant cross sectional area, and in practical cases, the connecting post may further be a pyramid having an axial symmetric cross section.

Further, based on the pole holding fork according to the above embodiments, a pole holding fork according to another embodiment of the present application further includes a position limiting pin 24. The base body 21 is provided with a position limiting hole 213, and the position limiting pin 24 is arranged in the position limiting hole 213. And the locating plate 22 is provided with a position limiting groove 222. By inserting the locating plate 22 into the locating plate mounting groove 212, and then inserting the position limiting pin 24 into the position limiting hole 213, the locating plate 22 is stuck by the position limiting pin 24 via the position limiting groove 222 under the action of the elastic returning member 23, such that the locating plate 22 can not pop out.

Compared with the pole holding fork according to the above embodiments, the pole holding fork according to the present embodiment is provided with the position limiting pin 24, the position limiting hole 213 and the position limiting groove 222, such that the locating plate 22 is prevented from popping out of its mounting position even when the pole holding fork head is not inserted, thereby preventing the locating plate 22 from being lost unexpectedly during dismounting and mounting the pole holding fork head.

In the pole holding fork according to the above embodiments, during the operation, a user has to press the locating plate 22 directly with his finger, since the locating plate 22 has a relatively thin thickness, thus the pressure acting on the finger of the operator is large, which is easy to hurt the finger. Thus, based on the above embodiments, a pole holding fork according to another embodiment of the present application further includes a pressing button 25.

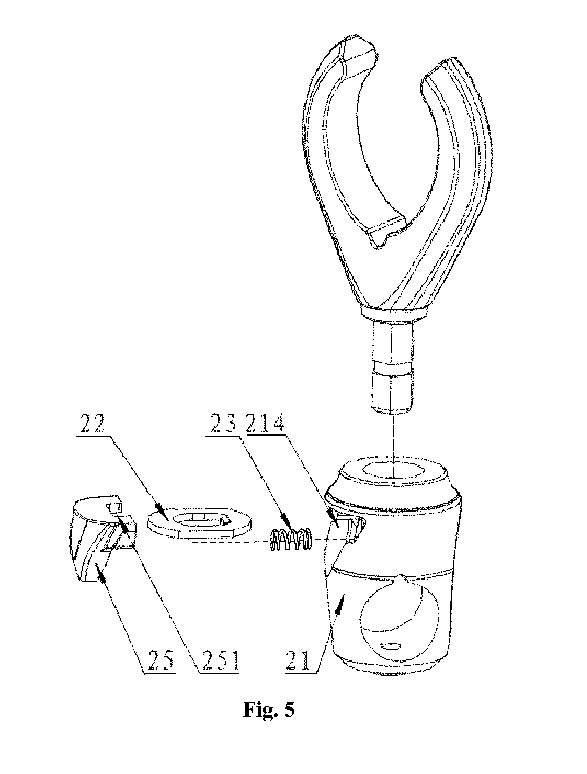

As shown in Figure 5, one end of the pressing button 25 is a pressing button surface, and the other end thereof is provided with a connecting groove 251 for connecting the locating plate 22. And, the base body 21 is provided with a pressing button hole 214 which is communicated with the locating plate mounting groove 212. The locating plate 22 is detachably and fixedly connected with the pressing button 25 via the connecting groove 251, and the locating plate 22 and the pressing button 25 are both arranged in the pressing button hole 214. One end of the elastic returning member 23 contacts the pressing button 25, and the other end thereof abuts against the base body 21 to fix the position.

As can be seen from the above description, through providing the pressing button 25, the bearing area for the user pressing the locating plate 22 is increased, which reduces the pressure applied on the finger, therefore avoiding the hurt to the finger.

It can be understood by the person skilled in the art that, in the accompanying drawings of the present application, the pressing button surface of the pressing button 25 is of an outwardly convex arc shape, and the contour of the pressing button surface is of a triangular shape having round angles. However, in the production, the pressing button surface may be designed in various shapes according to practical requirements, for example, the pressing button surface may be an arc-shaped surface with the center concaved inwardly, and the contour thereof may be of a rectangular shape having round angles.

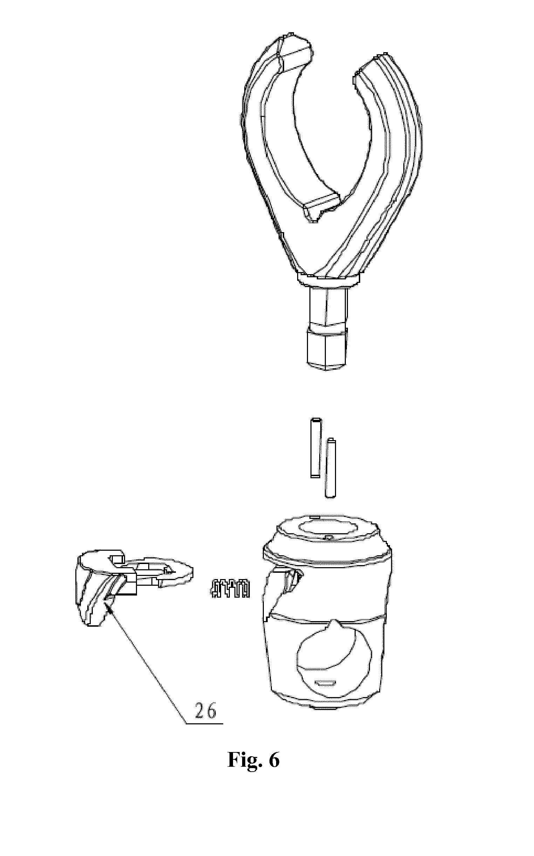

Preferably, in the above embodiments, the pressing button 25 and the locating plate 22 are formed integrally. That is, the pressing button 25 and the locating plate 22 form a locating pressing button 26 of a structure having a relatively large pressing button surface and a locating plate, as shown in Figure 6.

Specifically, in the pole holding fork according to the above embodiments, the elastic returning member 23 is a compression spring. The compression spring is a common elastic element, which has a simple structure, is reliable, and has a comprehensive manufacture standard, thus is easy to be purchased, and has a low cost.

An embodiment of the present application further provides a base for the pole holding fork head, specifically, the base for the pole holding fork head is the base 2 for the pole holding fork head in the above embodiments, and has a structure same as that described above, thus will not be described herein repeatedly.

For applying a conventional pole holding fork head in the base for the pole holding fork head according to embodiments of the present application, the base for the pole holding fork head according to the present embodiment further includes a converting rod 3.

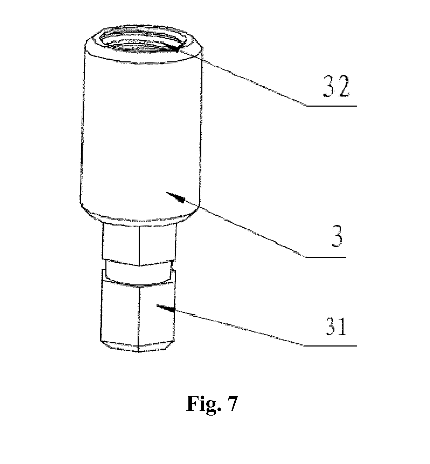

As shown in Figure 7, one end of the converting rod 3 is a converting rod connecting post 31 cooperating with the connecting hole 211, and the other end thereof is an inner threaded hole 32 capable of cooperating with a threaded section of the conventional pole holding fork head.

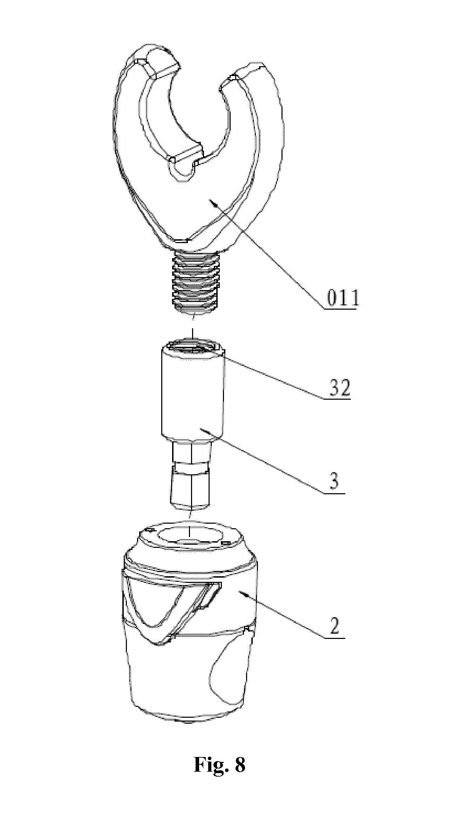

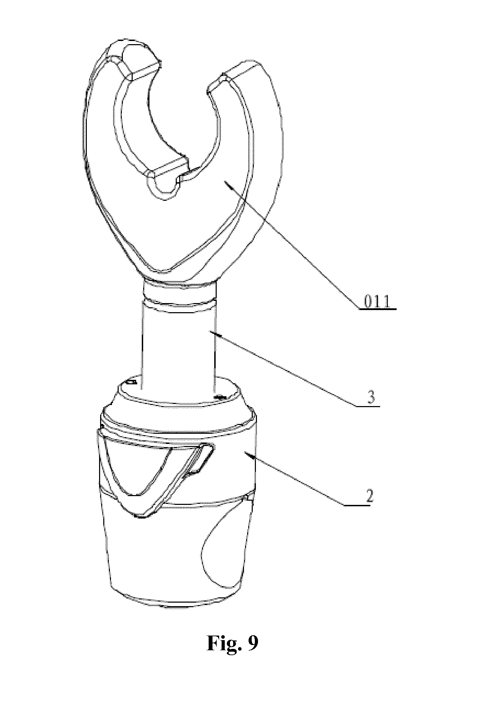

When using the base for the pole holding fork head according to embodiments of the present application, the threaded section of the conventional pole holding fork head 011 is screwed into the inner threaded hole 32 of the converting rod 3, and then the combined body of the conventional pole holding fork head 011 and the converting rod 3 is mounted into the base 2 for the pole holding fork head. As shown in Figure 8 and Figure 9, Figure 8 is a schematic view showing the connection relationship of the conventional pole holding fork head 011, the converting rod 3 and the base 2 for the pole holding fork head, and Figure 9 is a schematic view showing the structure of the above three components being assembled. Thus it can be known that, when the conventional pole holding fork head 011 and the converting rod 3 are combined, the combined structure has the structural features of the pole holding fork head described hereinabove, therefore the combined body of the conventional pole holding fork head and the converting rod may be used cooperatively with the base 2 for the pole holding fork head.

The above embodiments are described in a progressive manner. Each of the embodiments is mainly focused on describing its differences from other embodiments, and references may be made among these embodiments with respect to the same or similar portions among these embodiments.

The present application is described hereinabove by preferred embodiments, and these preferred embodiments are not intended to limit the present application. For the person skilled in the art, based on the above described methods and technical contents, many possible modifications, improvements or equivalent embodiments may be made to the technical solutions of the present application without departing from the scope of the technical solutions of the present application, and these modifications, improvements and equivalent changes are also deemed to fall into the protection scope of technical solutions of the present application defined by the claims.

## Claims

1. A pole holding fork comprising a pole holding fork head (1) and a base (2) for the pole holding fork head, wherein a bottom end of the pole holding fork head (1) is provided with a connecting post (11) having an axial symmetric polygonal cross section, the connecting post (11) is provided with a locating groove (12), and the pole holding fork head (1) is connected to the base (2) for the pole holding fork head via the connecting post (11), and
the base (2) for the pole holding fork head comprises:
a base body (21) provided with a connecting hole (211) cooperating with the connecting post (11) and a locating plate mounting groove (212) being communicated with the connecting hole (211);
a locating plate (22) arranged in the locating plate mounting groove (212) and provided with a locating hole (221) cooperating with the connecting post (11); and
an elastic returning member (23) arranged between the base body (21) and the locating plate (22).

2. The pole holding fork according to claim 1, wherein the cross section of the connecting post (11) is of a regular hexagonal shape.

3. The pole holding fork according to any one of claims 1 to 2, further comprising a position limiting pin (24), and the base body (21) is provided with a position limiting hole (213), the position limiting pin (24) is arranged in the position limiting hole (213), and the locating plate (22) is provided with a position limiting groove (222) configured to be stuck to the position limiting pin (24) under the action of the elastic returning member (23).

4. The pole holding fork according to claim 3, further comprising a pressing button (25), and the pressing button (25) is provided with a connecting groove (251), the locating plate (22) is detachably and fixedly connected to the pressing button (25) via the connecting groove (251), and one end of the elastic returning member (23) is connected to the locating plate (22) via the pressing button (25).

5. The pole holding fork according to claim 4, wherein the pressing button (25) and the locating plate (22) are formed integrally.

6. The pole holding fork according to claim 5, wherein the elastic returning member (23) is a compression spring.

7. A base for a pole holding fork head, wherein the base for the pole holding fork head is the base for the pole holding fork head according to any one of claims 1 to 6.

8. The base for the pole holding fork head according to claim 7, further comprising a converting rod (3), and one end of the converting rod (3) is a converting rod connecting post (31) cooperating with the connecting hole (211), and the other end of the converting rod (3) is an inner threaded hole (32) cooperating with a threaded section of an conventional pole holding fork head.
